# EUROPÄISCHE PATENTSCHRIFT

(11) **EP 0 379 650 B1**
(45) Veröffentlichungstag und Bekanntmachung des Hinweises auf die Patenterteilung: **23.06.1993**
(21) Anmeldenummer: 89119481.3
(22) Anmeldetag: 20.10.1989
(51) Int. Cl.: G01L 1/24, G01D 5/26, G01B 11/16

(54) **Lichtwellenleiter-Sensor für kleine Zug- oder Druckkräfte**
Fibre optical sensor for small tensile or compression forces
Capteur à fibre optique pour forces de traction et de compression petites

(30) Priorität: 23.01.1989 DE 3901845
(43) Veröffentlichungstag der Anmeldung: 01.08.1990
(73) Patentinhaber: SICOM Gesellschaft für Sensor- und Vorspanntechnik mbH, D-51105 Köln (DE)
(72) Erfinder: Lessing, Rainer, Dr., D-5226 Reichshof (DE)
(74) Vertreter: Hennicke, Albrecht, Dipl.-Ing.

(56) Entgegenhaltungen:
- WO-A-86/00988
- DE-A- 3 526 966
- GB-A- 2 188 719

## Beschreibung

Die Erfindung betrifft einen Lichtwellenleiter-(LWL)-Sensor für kleine Zug- oder Druckkräfte nach dem Oberbegriff des Anspruchs 1. Er dient als hochempfindlicher Dehnungs- oder Kontaktsensor.

Ein LWL-Sensor für Zugkräfte mit den Merkmalen des Oberbegriffs des Anspruchs 1 ist in der DE-A-3 526 966 beschrieben. Hier ist um den LWL mindestens eine Wendel eines Metalldrahtes, vorzugsweise ein Stahldraht von 0,08 mm Stärke, oder eines Glasfadens gewickelt, und darum ist eine zugfeste Umhüllung aufgebracht. Diese ist aus glasfaserverstärktem Kunststoff und drahtförmig mit einem Außendurchmesser von etwa 2 mm. Zur Ausbildung der Wendeln sind zahlreiche Angaben gemacht, so über Durchmesser und Schlaglänge, und nebenbei auch, daß mehrere Wendeln im Parallel- oder Kreuzschlag um den primärbeschichteten LWL gewickelt werden können, und zur Umhüllung sind verschiedene Materialien angegeben, vorzugsweise faserverstärkte Kunstharze (Duroplaste) wie Polyesterharz mit unidirektional orientierten Glasfasern, aber auch Thermoplaste.

Dieser LWL-Sensor für Zugkräfte ist empfindlicher als der in der älteren DE-C-3 305 234 beschriebene Sensor, bei dem um den LWL eine Wendel aus harzdurchtränkten Glasfasern gewickelt, oder eine durch den Zusatz von körnigem Glas- oder Korundpulver inhomogene Kunststoffschicht aufgebracht ist. Hier ist auch die Anwendung eines solchen Sensors zur überwachung von Betonbauwerken, wie einer Spannbeton-Brücke, beschrieben: Der LWL-Sensor befindet sich in dem mäanderartig eingelegten Spanndraht der Brücke, und die Meßenden des LWL sind mit einem Licht-Durchgangsprüfgerät (Dämpfungsmeßgerät) verbunden, das eine laufende mechanische überwachung der Brücke ermöglicht.

Solche LWL-Sensoren lassen sich unschwer von Zug- in Drucksensoren umbilden. So ist in der DE-A-3 628 083 eine Bodenplatte aus Balken mit eingelegten LWL-Drucksensoren beschrieben, bei denen die inhomogene Schicht zwischen LWL und Umhüllung eine Metalldrahtwendel ist. Diese Bodenplatte wird in Gebäuden oder im Freien zum Objektschutz in den Boden eingelegt.

Von den eingangs (in der DE-A-3 526 966) beschriebenen LWL-Zugsensoren ist bisher nur die Ausführungsform mit einer Wendel im praktischen Betrieb. Dabei ergab sich an einem Sensor ohne Umhüllung (Sensorseele), bestehend aus einem primärbeschichteten Multimode-LWL (Ø außen ca. 175 µm, Gradientenfaser 50/125) mit einem aufgeseilten Stahldraht (Ø ca. 90 µm) folgendes:
Beim Aufbringen einer axial wirkenden Kraft wird dieser Sensor gedehnt, wobei der Stahldraht in den LWL eingeschnürt wird und diesem durch den Microbendingeffekt lichtdämpfende Eigenschaften mitteilt. Der Dämpfungsanstieg ist linear mit der Dehnung, solange der Microbendingeffekt wirksam ist. In aller Regel ist dies bei einer Dehnung des Sensors bis 0.3 % der Fall. Aber bei größerer Dehnung lagert sich dieser Sensor so um, daß schließlich der Stahldraht gerade gespannt und nun der LWL um ihn gewickelt ist. Spätestens ab diesem Dehnungszustand ändert sich die Dämpfung des Sensors nicht mehr.

Eine Linearisierung der Dämpfung wird durch die Umhüllung des Sensors mit faserverstärktem Kunststoff erreicht. Bei geeigneter Wahl der Parameter für LWL, Draht und Umhüllung gelingt die Herstellung eines Dehnungssensors mit linearem Dämpfungs-Dehnungsverhalten bis über 1,5 % Dehnung. Hierbei werden Werte von 0,2 bis 1,5 dB Dämpfung je cm Dehnung erreicht.

Das Zusammenspiel der Parameter LWL-Draht-Umhüllung ist diffizil und schwer reproduzierbar. Dies macht die Herstellung eines solchen Dehnungssensors aufwendig, zeitraubend und teuer. Daher liegt der Erfindung die Aufgabe zugrunde, den LWL-Sensor so auszubilden, daß in erster Linie seine Herstellung vereinfacht, daneben aber auch seine Meßempfindlichkeit erhöht wird.

Zur Lösung dieser Aufgabe ist aus den in der DE-OS 35 26 966 angegebenen Ausführungformen ein Sensor mit folgendem Aufbau ausgewählt: Um den primärbeschichteter LWL (mit einem Außendurchmesser zwischen 0`15 und 0,3 mm) sind im Kreuzschlag mehrere Wendeln eines Stahldrahtes (mit einem Durchmesser zwischen 0,06 und 0,12 mm) gewickelt, und darum ist eine Umhüllung aus einer faserverstärkten Kunststoffstruktur aufgebracht, bei der längslaufende zugfeste Fasern in eine Matrix aus einem Duroplast-Kunstharz oder einem Thermoplast eingebettet sind.

Erfindungswesentlich ist nun, daß zwei Stahldrahtwendeln im Kreuzschlag mit einer Schlaglänge zwischen 8 und 12 mm um den primärbeschichteten Gradientenfaser-Multimode-LWL gewickelt sind, und daß die Schlaglänge ein ganzzahliges, von 3 bis über 10 betragen-des, Vielfaches der Pitchlänge der Gradientenfaser ist, wobei die Pitchlänge definiert ist als die doppelte Brennweite einer Linse der durch die Gradientenfaser simulierten Folge gleicher Sammellinsen. Einzelheiten sind in den Unteransprüchen angegeben, wovon die Ansprüche 2 und 3 die Ausbildung der Sensorseele, und 4 bis 6 die Ausbildung der Umhüllung betreffen.

Die mit der Erfindung erzielten Vorteile bestehen darin, daß die obenerwähnten Mängel bei der Sensorherstellung behoben sind und die Sensorempfindlichkeit erheblich erhöht ist. Nunmehr wird die Funktion des Sensors fast allein von der Sensorseele (LWL und darum zwei Wendeln im Kreuzschlag) ausgeübt, und die spätere Umhüllung mit Faserverbundwerkstoff ändert die optischen Sensoreigenschaften kaum mehr und dient lediglich der Erhöhung der mechanischen Stabilität.

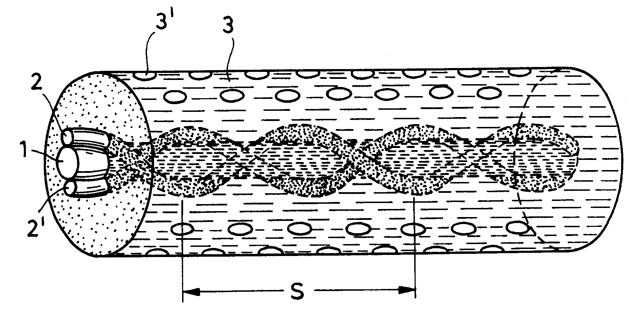

Ein Ausführungsbeispiel der Erfindung ist in der Zeichnung dargestellt und wird im folgenden näher beschrieben. Die Figur zeigt einen LWL-Sensor mit einer Umhüllung aus Faserverbundwerkstoff, bei dem auf den LWL zwei Stahldrahtwendeln im Kreuzschlag gewickelt sind.

Ausgegangen ist von dem primärbeschichteten LWL 1, einer Multimode-Gradientenfaser 50/125 (Kern-/Manteldurchmesser in µm) mit einem Außendurchmesser (über der Primärbeschichtung) von 0,175 mm. Der Durchmesser der beiden Stahldrähte beträgt 0,09 mm, und die Schlaglänge S der beiden Wendeln 2 und 2' beträgt 10 mm. Der im Kreuzschlag zum ersten Draht 2 auf den LWL 1 gewickelte zweite Draht 2' verhindert bei größerer Dehnung die obenerwähnte Umlagerung des LWL und fixiert ihn in seiner ursprünglichen Lage (der Sensorlängsachse) auch bei großer Dehnung.

Beide Drähte können in einem Arbeitsgang mit Kreuzschlag (Gegenschlag) und sonst gleichen Parametern (Schlaglänge, Abzugskräfte) um den in der Mitte laufenden LWL verseilt werden. Es kann aber auch der zweite Draht nachträglich und/oder mit einer anderen Schlaglänge aufgebracht werden.

Bei einem solchen Sensor ist nicht nur das Dämpfungs-Dehnungsdiagramm zu größerer Dehnung hin linearisiert, sondern es ist auch die Sensorempfindlichkeit erheblich erhöht. Lag diese bisher bestenfalls bei 1,5 bis 2 dB Dämpfung je cm Dehnung, werden nun ohne jeden weiteren mechanischen Verstärkungsmechanismus Werte bis 6 dB/cm erreicht. Dies rührt insbesondere von den Kräften her, die von den Stahldraht-Kreuzungsstellen auf den LWL einwirken.

Paßt man die Periodizität dieser Kreuzungspunkte durch geeignete Wahl der Wendelschlaglängen an die sogenannte Pitchlänge der Gradientenfaser, das ist die doppelte Brennweite einer Linse der durch die Gradientenfaser simulierten Folge gleicher Sammellinsen, an, so steigt die Sensorempfindlichkeit auf Werte über 10 dB/cm. Um dies zu erreichen, hat man die Wendelschlaglänge S als ein ganzzahliges, den Wert 3 oder 4 oder 5 usw. bis über 10 betragendes, Vielfaches der Pitchlänge der Gradientenfaser zu wählen. In diesem Fall muß allerdings die Abzugskraft der Stahldrähte soweit reduziert werden, daß keine zu hohe Grunddämpfung des Sensors entsteht.

Die hohe Querdruckempfindlichkeit dieses Dehnungssensors kann dazu benutzt werden, ihn als empfindlichen Kontaktsensor zu verwenden. Wird er in Bereiche appliziert, wo Querdrücke (z. B. durch das Gewicht eines Menschen) auftreten, so ist leicht eine opto-elektronisch vorgegebene Schwelle überschreitbar. In diesem Fall erzeugt der Sensor eine einstellbare Kontaktanzeige, die außerordentlich empfindlich reagiert. In Reihe geschaltete Schwellen können zur Kontaktselektion herangezogen werden.

Was schließlich die Umhüllung 3 des Sensors betrifft, so wählt man zur Verwendung als Dehnungssensor in Betonbauwerken eine Umhüllung aus einem hochfesten Faserverbundwerkstoff, bei dem unidirektional orientierte Glasfasern bevorzugt mit einem Polysterharz oder auch mit einem Thermoplast verbunden sind. Dagegen wählt man zur Verwendung als Kontaktsensor eine Umhüllung aus einem Thermoplast, in den nur wenige Verstärkungsfasern eingebettet sind. Auch ist es vorteilhaft, wenn die Oberfläche der Umhüllung 3 zur besseren Einbettung in das zu überwachende Bauteil eine eingeprägte Struktur in Form einzelner kleiner wannenförmiger Vertiefungen 3' hat.

## Patentansprüche

1. Lichtwellenleiter-(LWL-)Sensor für kleine Zug- oder Druckkräfte in Drahtform mit folgendem Aufbau von innen nach außen:
- primärbeschichteter LWL (1) mit einem Außendurchmesser zwischen 0.15 und 0,3 mm,
- darum im Kreuzschlag gewickelt mehrere Wendeln (2, 2') eines Stahldrahtes mit einem Durchmesser zwischen 0,06 und 0,12 mm
- und darum eine Umhüllung aus einer faserverstärkten Kunststoffstruktur (3), wobei längslaufende zugfeste Fasern in eine Matrix aus einem Duroplast-Kunstharz oder einem Thermoplast eingebettet sind, **dadurch gekennzeichnet,**
- daß zwei Stahldrahtwendeln (2, 2') im Kreuzschlag mit einer Schlaglänge (S) zwischen 8 und 12 mm um den primärbeschichteten Gradientenfaser-Multimode-LWL (1) gewickelt sind,
- und daß die Wendelschlaglänge (S) ein ganzzahliges, von 3 bis über 10 betragendes, Vielfaches der Pitchlänge der Gradientenfaser (1) ist, wobei die Pitchlänge definiert ist als die doppelte Brennweite einer Linse der durch die Gradientenfaser simulierten Folge von Sammellinsen.

2. LWL-Sensor nach Anspruch 1, **dadurch gekennzeichnet,** daß der Außendurchmesser des primärbeschichteter LWL (1) 0,175 mm, der Durchmesser der Stahldrähte 0,09 mm, und die Schlaglänge (S) der beiden Wendeln (2, 2') 10 mm beträgt.

3. LWL-Sensor nach Anspruch 1, **dadurch gekennzeichnet,** daß die Schlaglänge (S) der beiden Wendeln (2, 2') voneinander verschieden ist.

4. LWL-Sensor nach einem der Ansprüche 1 bis 3, **dadurch gekennzeichnet,** daß zur Verwendung als Dehnungssensor in Betonbauwerken seine Umhüllung (3) aus einem hochfesten Faserverbundwerkstoff besteht, bei dem unidirektional orientierte Glasfasern mit einem Polysterharz oder einem Thermoplast verbunden sind.

5. LWL-Sensor nach einem der Ansprüche 1 bis 3, **dadurch gekennzeichnet,** daß zur Verwendung als Kontaktsensor seine Umhüllung (3) aus einem Thermoplast besteht, in den nur wenige Verstärkungsfasern eingebettet sind.

6. LWL-Sensor nach Anspruch 4 oder 5, **dadurch gekennzeichnet,** daß die Oberfläche der Umhüllung (3) zur besseren Einbettung in das zu überwachende Bauteil eine eingeprägte Struktur in Form einzelner kleiner wannenförmiger Vertiefungen (3') hat.

## Claims

1. A light-wave-guide (LWG) sensor for low tensile or compressive forces, in wire form, having the following structure from the inside towards the outside:
- a primary-coated LWG (1) with an outer diameter of between 0.15 and 0.3 mm;
- wound therearound in crosslay, a plurality of coils (2, 2') of a steel wire having a diameter of between 0.06 and 0.12 mm;
- and therearound, a sheathing of a fibre-reinforced synthetic-material structure (3), where longitudinally extending tension-resistant fibres are embedded in a matrix made of a thermosetting synthetic resin or a thermoplastic,
characterised in that
- two steel-wire coils (2, 2') are wound in crosslay, with a lay length (S) of between 8 and 12 mm, round the primary-coated gradient-fibre multimode LWG (1),
- and that the coil lay length (S) is an integral multiple, amounting to between 3 and more than 10, of the pitch length of the gradient fibres (1), the pitch length being defined as twice the focal length of a lens of the series of convergent lenses which is simulated by the gradient fibres.

2. A LWG sensor according to Claim 1, characterised in that the outer diameter of the primary-coated LWG (1) is 0.175 mm, the diameter of the steel wires is 0.09 mm, and the lay length (S) of the two coils (2, 2') is 10 mm.

3. A LWG sensor according to Claim 1, characterised in that there is a difference between the lay lengths (S) of the two coils (2, 2').

4. A LWG sensor according to any one of Claims 1 to 3, characterised in that, for use as an expansion sensor in concrete structures, its sheathing (3) consists of a high-strength fibre composite material in which unidirectionally orientated glass fibres are combined with a polyester resin or a thermoplastic.

5. A LWG sensor according to any one of Claims 1 to 3, characterised in that, for use as a contact sensor, its sheathing (3) consists of a thermoplastic in which only a few reinforcing fibres are embedded.

6. A LWG sensor according to Claim 4 or 5, characterised in that, to improve the embedding in the building component which is to be monitored, the surface of the sheathing (3) has an imprinted texture in the form of individual small boat-shaped recesses (3').

## Revendications

1. Capteur à fibre optique pour des forces de traction ou de compression, se présentant sous la forme d'un fil et ayant la structure suivante en partant de l'intérieur vers l'extérieur :
- une libre optique à revêtement primaire (1) ayant un diamètre extérieur compris entre 0,15 et 0,3 mm,
- plusieurs spires à enroulement croisé (2, 2') d'un fil d'acier d'un diamètre compris entre 0,06 et 0,12 mm,
- autour une gaine en une structure de matière synthétique renforcée de fibres (3), avec des fibres longitudinales résistant à la traction dans une matrice formée d'une résine synthétique duroplastique ou thermoplastique, caractérisé en ce que :
- deux spires de fil d'acier (2, 2') à enroulement croisé ont un pas (S) compris entre 8 et 12 mm en étant enroulées autour de la libre optique multimode à gradient (1) et
- le pas (S) correspond à un multiple entier compris entre 3 et 10 du pas de la libre à gradient (2), le pas étant défini comme égal au double de la distance locale d'une lentille appartenant à la succession de lentilles collectrices simulées par les fibres à gradient.

2. Capteur de fibre optique selon la revendication 1, caractérisé en ce que le diamètre extérieur de la libre à revêtement primaire (1) est égal à 0,175 mm, le diamètre des fils d'acier est égal à 0,09 mm et le pas (S) des deux spires (2, 2') est égal à 10

3. Capteur de fibre optique selon la revendication 1, caractérisé en ce que le pas (S) des deux spires (2, 2') est différent.

4. Capteur à fibre optique selon l'une des revendications 1 à 3, caractérisé en ce que pour son application comme capteur d'allongement dans des ouvrages en béton, sa gaine (3) est en une matière composite renforcée de fibres, très résistante, avec des fibres de verre à orientation unidirectionnelle, combinées à une résine de polyester ou une matière thermoplastique.

5. Capteur à libre optique selon l'une des revendications 1 à 3, caractérisé en ce que pour son application comme capteur de contact, sa gaine (3) est réalisée en une matière thermoplastique dans laquelle ne sont noyées que très peu de fibres de renforcement.

6. Capteur à fibre optique selon les revendication 4 ou 5, caractérisé en ce que la surface extérieure de l'enveloppe (3) comporte une structure imprimée sous la forme de petites cavités en alvéoles (3') pour assurer une meilleure intégration à la partie d'ouvrage à surveiller.
